# EUROPEAN PATENT APPLICATION

(11) **EP 4 287 060 A1**
(43) Date of publication of application: **06.12.2023**
(21) Application number: 22176158.8
(22) Date of filing: 30.05.2022
(51) Int. Cl.: G06F 30/17, G06F 30/23, G06F 111/10, G06F 113/10, G06F 119/08, G06F 119/18

(54) **METHOD FOR ADDITIVE MANUFACTURING OF A COMPONENT WITH A TOPOLOGY OPTIMIZED SUPPORT STRUCTURE BASED ON A THERMO-MECHANICAL PROCESS SIMULATION**

(71) Applicant: Siemens Energy Global GmbH & Co. KG, 81739 München (DE); Ansys, Inc., Canonsburg, PA 15317 (US)
(72) Inventor: ESCOBAR, Enrique, 81541 München (DE); HIRICOIU, Alexandre, 86350 Château-Garnier (FR); WEINKAUF, Till, 16761 Henningsdorf (DE); HEITMANN, Timo, 10245 Berlin (DE)
(74) Representative: Isarpatent

(57) **Abstract**

A method for additive manufacturing of a component comprises defining a digital 3D model of an initial support structure for the component based on structural prerequisites of the component, wherein a contact area between the component and the initial support structure is specified; extracting thermal input data based on a thermo-mechanical process simulation of the component with the initial support structure, wherein the thermal input data comprise an expected spatial temperature distribution across the initial support structure, in particular at the contact area; extracting mechanical input data from the thermo-mechanical process simulation of the initial support structure, wherein the mechanical input data comprise expected position-dependent mechanical loads on the initial support structure, in particular at the contact area; executing a topology optimization algorithm on the digital 3D model of the initial support structure based on the thermal input data and the mechanical input data as thermo-mechanical boundary conditions to derive a digital 3D model of a topology optimized support structure for the component with reduced mass density compared to the initial support structure; and generating instructions usable by an additive manufacturing device to additively manufacture the component together with the topology optimized support structure based on the derived digital 3D model.

## Description

### TECHNICAL FIELD

The present invention pertains to a method for additive manufacturing of a component with a topology optimized support structure and a manufacturing device for executing such a method.

### BACKGROUND

Various additive manufacturing techniques rely on support structures to sustain overhanging features while building a part, to hold and secure the respective part onto a build plate, to prevent distortion/warping and/or to dissipate process-induced heat. Usually, their removal after manufacturing is required, which may increase the overall costs due to the necessary post-processing of the part. An example for such an additive manufacturing technique is Laser Powder Bed Fusion, where a component is built up together with its support structure layer by layer from a modelling material by depositing the modelling material in powder form on a platform and melting it locally using a focused high power-density laser, resulting in a solid, integral component after cooling.

Especially for parts with large size and/or volume, a significant amount of support material may be required to prevent deformation of a part during manufacturing and/or even failure of the entire built job, e.g. due to a rip-off from the base plate. Since the amount of support volume/mass may correlate with the price of the build job, a reduction of the support mass under consideration of the given requirements could be highly beneficial. It would furthermore be beneficial if such optimizations could also take into account the heat dissipation along the support structure, as this may influence thermally induced mechanical stresses in the build job.

Mezzadri et al., "Topology optimization of self-supporting support structures for additive manufacturing," Additive Manufacturing, Volume 21, 666-682, 2018, describe the generation of support structures for additive manufacturing as a topology optimization problem.

Such a support topology optimization may be subjected to thermo-mechanical constraints, as described for example in Liu et al., "Current and future trends in topology optimization for additive manufacturing," Struct Multidisc Optim 57, 2457-2483, 2018, Allaire et al., "Support optimization in additive manufacturing for geometric and thermo-mechanical constraints," Struct Multidisc Optim 61, 2377-2399, 2020, and Giraldo-Londono et al., "Multi-material thermomechanical topology optimization with applications to additive manufacturing: Design of main composite part and its support structure," Computer Methods in Applied Mechanics and Engineering, Volume 363, 2020.

### SUMMARY

Against this background, there is a need to find solutions for topology optimizing support structures with optimized heat dissipation.

To this end, the present invention provides a method and a manufacturing device with the features of the independent claims.

According to an aspect of the invention, a method for additive manufacturing of a component with a topology optimized support structure comprises defining a digital 3D model of an initial support structure for the component based on structural prerequisites of the component, wherein a contact area between the component and the initial support structure is specified; extracting thermal input data based on a thermo-mechanical process simulation of the component with the initial support structure, the thermo-mechanical process simulation describing how the initial support structure behaves during additive manufacturing with regards to temperature and mechanical stress, wherein the thermal input data comprise an expected spatial temperature distribution across the initial support structure, in particular at the contact area; extracting mechanical input data from the thermo-mechanical process simulation of the initial support structure, wherein the mechanical input data comprise expected position-dependent mechanical loads on the initial support structure, in particular at the contact area; executing a topology optimization algorithm on the digital 3D model of the initial support structure based on the thermal input data and the mechanical input data as thermo-mechanical boundary conditions to derive a digital 3D model of a topology optimized support structure for the component with reduced mass density compared to the initial support structure; and generating instructions usable by an additive manufacturing device to additively manufacture the component together with the topology optimized support structure based on the derived digital 3D model.

According to a further aspect of the invention, a manufacturing device comprises a processor configured to execute the method according to the invention.

According to yet a further aspect of the invention, a computer program product comprises executable program instructions configured to, when executed, perform the method according to the invention.

According to yet a further aspect of the invention, a non-transient computer-readable data storage medium comprises executable program instructions configured to, when executed, perform the method according to the invention.

One idea of the present invention is to employ a thermo-mechanical process simulation as a boundary condition for a topology optimization of the support structure of an additively manufactured component. In this regard, the invention combines mechanical inputs with thermal inputs to ensure that not only the mechanical behavior of the support structure underneath the component is taken into account but also the heat dissipation along the support structure. By factoring in the temperature distribution inside the support structure and/or on the surface(s) of the support structure, e.g. in height direction, at or on the contact surface etc., the heat dissipation of the supports may thus be considered for the design of the shape and structure of the supports. In other words, the support structure may be designed with thermally induced mechanical stresses in mind. Hence, the resulting structure may be optimized to fulfill all structural/mechanical as well as thermal requirements of the initial support structure while at the same time offering a reduced mass density and thus less material costs for each build job.

Further embodiments of the present invention are subject of the subordinate claims and of the following description, referring to the drawings.

According to an embodiment, the thermal input data may comprise final layer temperatures for each deposited layer representing a spatial temperature distribution for each deposited layer after cool down of the respective layer and before deposition of the respective next layer.

Hence, the end temperatures of each layer after deposition and cool down and before deposition of the respective next layer may be extracted from the thermo-mechanical process simulation. This may take into account that the modelling material deposited in each layer cools down across the respective layer while deposition of the respective layer is still proceeding. On this basis, specifically the temperature profile at the contact between the support structure and the component can be taken into account within each individual layer at the respective time of manufacturing. By reiterating this procedure over all layers, a detailed spatial temperature profile across the contact area may be derived, which then precisely characterizes heat dissipation along the contact between the support structure and the component.

According to an embodiment, the method may further comprises performing a thermo-mechanical process simulation of the component with the topology optimized support structure; and defining a pre-deformation of the topology optimized support structure based on the thermo-mechanical process simulation to be considered during additive manufacturing of the component.

Amongst others, the topologically optimized support structure may hence be validated against the initial support structure based on the thermo-mechanical process simulation. Moreover, the results of the simulation may be employed to assess whether resulting warpages and other deformations may need to be compensated by suitable pre-deformations of the support structure. This means that the support structure can be shaped to counterbalance certain expected deformations that may arise during the manufacturing due to mechanical and/or thermal influences.

According to an embodiment, defining the digital 3D model may comprise definition of a variable design space around the initial support structure, in which the topology optimization algorithm is executed.

Hence, the design space, that is, the bounding box, of the support structure may be kept variable for maximum flexibility during the topology optimization. The supports are thus not limited to the original bounding box of the initial support structure but may also be varied beyond those limits.

According to an embodiment, the topology optimization algorithm may be executed iteratively until the design space matches predefined criteria.

It is to be noted with regards to the topology optimization that not only the mass density (weight reduction) and the thermo-mechanical state but also additional boundary conditions may be utilized, comprising for example overhang constraints etc.

According to an embodiment, the initial support structure may comprise several individual supports with corresponding contact areas. The topology optimization algorithm may be executed on each support individually.

Each support may thus be optimized individually in an iterative procedure until the respective bounding box and the configuration of the support is acceptable.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: depicts a schematic view of an additive manufacturing device according to an embodiment of the present invention for additively manufacturing a component together with its support structure;
- Fig. 2: is a schematic view of an initial support structure and a topology optimized support structure manufacturable with the device of Fig. 1;
- Fig. 3: shows a schematic flow diagram of an embodiment of a method for additive manufacturing with the device of Fig. 1; and
- Fig. 4: is a schematic detailed view of the initial support structure of Fig. 2.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

### DETAILED DESCRIPTION OF THE DRAWINGS

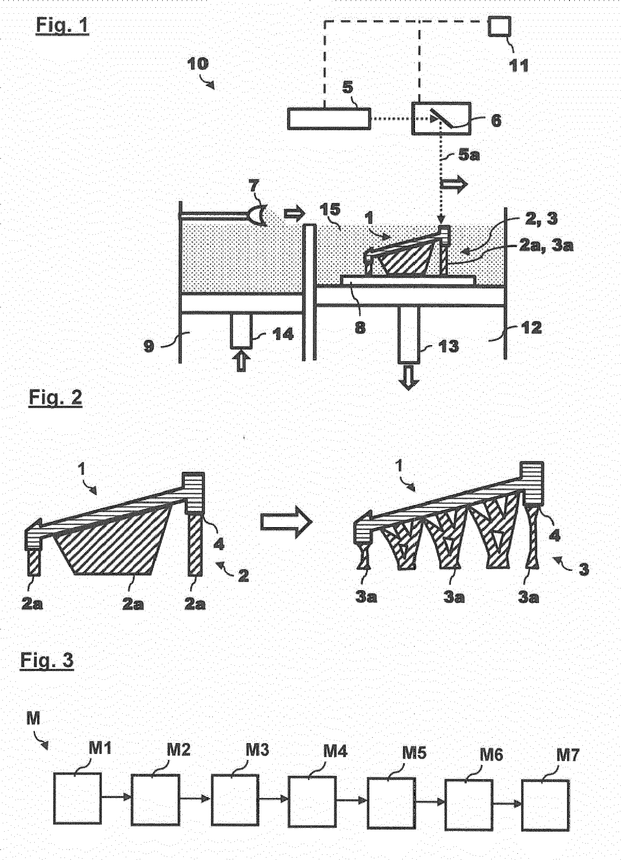

Figure 1 shows a schematic view of an additive manufacturing device 10 according to an embodiment of the present invention for additively manufacturing (AM) a component 1 together with its support structure 2, 3. Fig. 3 shows a schematic flow diagram of a corresponding method M.

The 3D-printing method M may be used for the additive production of a component 1 together with its support structure 2, 3 from a modelling material 15. To this end, the method M may comprise additively manufacturing the component 1 by depositing and solidifying a modelling material 15 in material layers. This may particularly comprise liquefying or melting the deposited modelling material 15. However, in other embodiments the modelling material 2 may already be deposited in a fluid or flowable condition.

The basic AM process may be, for example, a selective laser melting (SLM) process (also called Laser Powder Bed Fusion), in which the deposited modelling material 15 is melted by a continuous or pulsed laser beam 5a being focused on a localized melt spot on the uppermost layer of the modelling material 15. This results in a molten pool or bath at the irradiated spot, which may be several material layers deep and which may also melt some of the surrounding and already solidified modelling material 15. Next the laser beam 5a is moved further and the melt solidifies through cooling, whereby the last material layer is fused with the material layer(s) beneath.

The modelling material 15 may, for example, be selected from the group of metallic materials, metallic material combinations and metallic alloys. In one particular example, the modelling material 15 may be aluminum, titanium and/or other metal and/or an alloy or combination of these. In principle, the manufacturing device 10 may be configured for multicomponent printing so that combinations of different materials may be printed at the same time. The person of skill will be readily aware that the term modelling material 15 includes such combinations of materials. The modelling material 2 may particularly be provided in powder form.

Generally, the present invention provides many possibilities to liquefy the modelling material 15 by introducing heat locally into the deposited modelling material 15. The particular embodiment of the manufacturing device 10 in Fig. 1 and the associated 3D-printing method M is based on the use of a laser beam 5a within a SLM process. Such a laser beam 5a can generate heat very precisely and in a controlled manner. The laser beam 5a is controlled by a control unit 11 of the additive manufacturing device 10, which may contain a microprocessor or the like and may be integrated in and/or communicatively connected to a computing system.

In SLM, as described above, the modelling material 15 is applied in powder form on a fabrication table, plate or platform 8 within a fabrication chamber 12. The modelling material 15 is supplied from a supply chamber 9 adjacent to the fabrication chamber 12. To this end, a powder delivery system including a material feeder 7, roller and/or recoater blade are used to deliver modelling material 15 in a stepwise fashion for each deposited layer of modelling material 15 into the fabrication chamber 12. The modelling material 15 forms a so-called powder bed on the fabrication plate 8 within the fabrication chamber 12. The modelling material 15 laying on top of the powder bed is liquefied by local laser irradiation with the laser beam 5a, resulting in a solid, continuous metal component 1 after cooling. However, it is understood that alternatively or in addition to a laser beam 5a, the 3D-printing method M may also use particle beams, e.g. an electron beam, or other energy beams for liquefying the modelling material 15.

The manufacturing device 10 in Fig. 1 provides an energy source in the form of a laser 5, for example a Nd:YAG laser, a CO2 laser or the like. In Fig. 1, the laser 5 transmits the laser beam 5a selectively (i.e. locally) onto a certain part of the powder surface of the powdery modelling material 15. For this purpose, an optical deflection device or a scanner module such as a movable or tiltable mirror 6 can be provided, which deflects the laser beam 5a depending on its tilt position onto a certain part of the powder surface of the modelling material 15.

The manufacturing device 10 may further comprise the usual components for adjusting such a laser beam 5a, for example focusing optics or similar (not shown in Fig. 1). At the point of impact of the laser beam 5a, i.e. the melt spot, the modelling material 15 is heated so that the powder particles are locally melted and form an agglomerate during cooling. Depending on a digital production model provided by a CAD system ("computer-aided design"), the laser beam 5a scans the powder surface (see arrow in Fig. 1). After selective melting and local agglomeration of the powder particles in the surface material layer of the modelling material 15, excess and non-agglomerated metal modelling material 15 may be removed.

Then the fabrication plate 8 is lowered by means of a fabrication piston 13 (see arrow in Fig. 1) and new modelling material 15 is transferred from the supply chamber 9 into the fabrication chamber 12 with the aid of the material feeder 7 or another suitable device. While the fabrication platform 8 is lowered stepwise via the fabrication piston 13 the modelling material 15 is moved upward within the supply chamber 9 by a supply piston 14 so that the material feeder 7 may move new modelling material 15 into the fabrication chamber 12. Within the fabrication chamber 12, the modelling material 15 may be preheated by infrared light or similar means to a working temperature just below the melting temperature of the modelling material 15 to accelerate the melting process.

The usage of SLM and similar methods as manufacturing technology normally requires to provide the component 1 with a support structure 2, 3 during the actual manufacturing to hold and stabilize the component 1 on top of the fabrication plate 8. Such a support structure 2, 3 usually comprises one or several individual supports 2a, 3a, which are then removed later on during post-processing of the component 1 after the printing process has been finished.

Especially for components 1 with large volume, a lot of support is required to prevent deformation or potential job failures due to a rip-off from the fabrication plate 8. In order to keep the required material, and thus the costs of the manufacturing process, as low as possible, there is a need to keep such a support structure as lightweight and slim as possible.

In an additive manufacturing method M like the one described here, the 3D design of a component 1 thus necessarily also requires a digital 3D model of the corresponding support structure 2, 3. Based on such a model, a three-dimensional sintered or "printed" metal component 1 is created together with its support structure 2, 3 from agglomerated modelling material 15 in an iterative generative build-up process, in which also the surrounding powdery metal modelling material 15 may serve to temporarily support the part of metal component 1 that has been built up to then. Due to the continuous downward movement of the fabrication table 8 the metal component 1 is manufactured in layered model generation.

For example, the component 1 may be a turbine blade/vane fabricated from a metal material, e.g. for a heavy-duty industrial gas turbine engine for power generation. The vane may require three volume supports 2a, 3a, one on each of two distal wedge faces and one underneath a central airfoil. This is schematically indicated in Figs. 1 and 2.

With the presently followed approach an improved design of the support structure 2, 3 is achieved, as will be described in the following, which aims to reduce the mass density and thus costs of the support structure 2, 3 without having to compromise with regards to heat dissipation and the associated mechanical stresses.

With reference to Fig. 3, the present method M comprises under M1 defining a digital 3D model of an initial support structure 2 for the component 1 based on structural prerequisites of the component 1, wherein a contact area 4 between the component 1 and the initial support structure 2 is specified.

This initial support structure 2 constitutes the starting point of an optimization process based on a thermo-mechanical process simulation of the component 1 and the initial support structure 2 and a subsequent topology optimization algorithm, which uses thermal input data and mechanical input data from the thermo-mechanical process simulation as thermo-mechanical boundary conditions. The thermo-mechanical process simulation describes how the initial support structure 2 behaves during additive manufacturing with regards to temperature and mechanical stress. The topology optimization algorithm then optimizes the material layout within a given design space (bounding box) for a given set of loads, boundary conditions and constraints with the goal of maximizing the performance of the system. The design space, in which the topology optimization algorithm is executed, may be variable around the initial support structure 2. The design of the support structure may then attain any shape within the design space within the given boundary conditions.

For example, the boundary conditions may comprise weight reduction (i.e. reduction of the mass and/or mass density by a predefined amount, e.g. by 50%), overhang constraints and the above-mentioned thermo-mechanical conditions.

Presently, the method M comprises under M2 extracting thermal input data based on the thermo-mechanical process simulation of the component 1 with the initial support structure 2, which comprise an expected spatial temperature distribution across the initial support structure 2, in particular at the contact area 4.

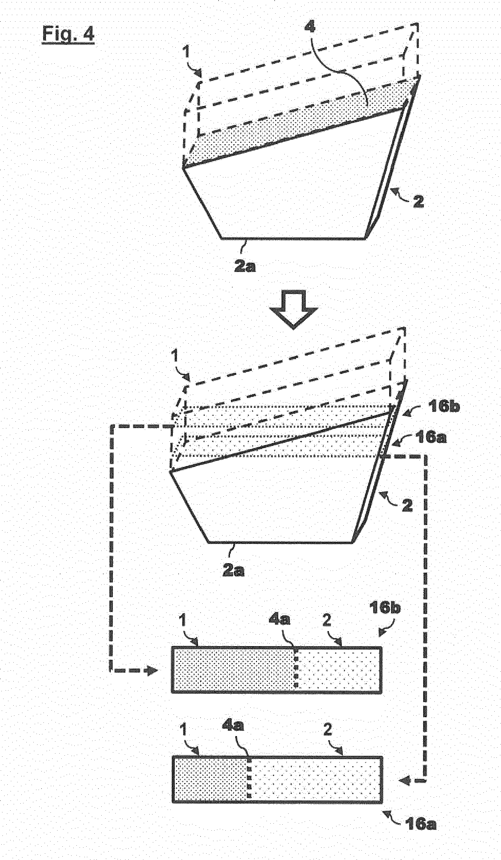

As best understood with reference to Fig. 4, the thermal input data may comprise final layer temperatures for each deposited layer 16a, 16b representing a spatial temperature distribution for each deposited layer 16a, 16b after deposition of the respective layer 16a, 16b and before deposition of the respective next layer 16a, 16b.

As can be seen in Fig. 4, the component 1 together with its initial support structure 2 (above in Fig. 4) can be analyzed layer-by-layer in the thermo-mechanical process simulation (below in Fig. 4). Each deposited layer 16a, 16b has a certain temperature profile after finished deposition of the respective layer 16a, 16b and before deposition of the respective next layer 16a, 16b on top. Based on a simulation of each layer 16a, 16b, the respective end temperatures can be extracted across each layer 16a, 16b. Hence, in particular, the respective temperatures at the contact line 4a between the support structure 2 and the component 1 can be extracted (dotted lines at the bottom of Fig. 4). By repeating this over all layers, the spatial temperature distribution across the whole contact area 4 between the initial support structure 2 and the component 1 can be extracted and taken into account for optimization of the support structure 2 with regards to heat dissipation and the related thermally induced mechanical stresses.

Moreover, the method M comprises under M3 extracting mechanical input data from the thermo-mechanical process simulation of the initial support structure 2, which comprise expected position-dependent mechanical loads on the initial support structure 2, in particular at the contact area 4.

Subsequently, the method M comprises under M4 executing the topology optimization algorithm on the digital 3D model of the initial support structure 2 based on the thermal input data and the mechanical input data as thermo-mechanical boundary conditions to derive a digital 3D model of a topology optimized support structure 4 for the component 1 with reduced mass density compared to the initial support structure 2.

The topology optimization algorithm may be executed iteratively until the design space matches predefined criteria. Coming back to the example of a turbine vane, the initial support structure 2 may comprise three individual supports 2a with corresponding contact areas 4. The topology optimization algorithm may then be executed on each support 2a individually. The resulting individual optimized supports 3a may then be joined again to a topology optimized support structure 3.

In a validation phase, the method M may further comprise under M5 performing a thermo-mechanical process simulation of the component 1 with the topology optimized support structure 3. To this end, the digital models of the individual topology optimized supports 3a are joined together. The result may be compared to the case with the initial support structure 2. Moreover, the method M may comprise under M6 defining a pre-deformation of the topology optimized support structure 3 based on the thermo-mechanical process simulation to be considered during additive manufacturing of the component 1.

Finally, the method M then comprises under M7 generating instructions usable by the additive manufacturing device 10 to additively manufacture the component 1 together with the topology optimized support structure 3 based on the derived digital 3D model. The instructions are then used by the additive manufacturing device 10 to manufacture the component 1 and the optimized support structure 3.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of reference signs

- 1: component
- 2: initial support structure
- 2a: support
- 3: topology optimized support structure
- 3a: topology optimized support
- 4: contact area
- 4a: contact line
- 5: laser
- 5a: laser beam
- 6: mirror
- 7: material feeder
- 8: fabrication plate
- 9: supply chamber
- 10: additive manufacturing device
- 11: control unit
- 12: fabrication chamber
- 13: fabrication piston
- 14: supply piston
- 15: modelling material
- 16a,b: deposited layer
- M: method
- M1-M7: method steps

## Claims

1. A method (M) for additive manufacturing of a component (1) with a topology optimized support structure (3), the method (M) comprising:
defining (M1) a digital 3D model of an initial support structure (2) for the component (1) based on structural prerequisites of the component (1), wherein a contact area (4) between the component (1) and the initial support structure (2) is specified;
extracting (M2) thermal input data based on a thermo-mechanical process simulation of the component (1) with the initial support structure (2), the thermo-mechanical process simulation describing how the initial support structure (2) behaves during additive manufacturing with regards to temperature and mechanical stress, wherein the thermal input data comprise an expected spatial temperature distribution across the initial support structure (2), in particular at the contact area (4);
extracting (M3) mechanical input data from the thermo-mechanical process simulation of the initial support structure (2), wherein the mechanical input data comprise expected position-dependent mechanical loads on the initial support structure (2), in particular at the contact area (4);
executing (M4) a topology optimization algorithm on the digital 3D model of the initial support structure (2) based on the thermal input data and the mechanical input data as thermo-mechanical boundary conditions to derive a digital 3D model of a topology optimized support structure (4) for the component (1) with reduced mass density compared to the initial support structure (2); and
generating (M7) instructions usable by an additive manufacturing device (10) to additively manufacture the component (1) together with the topology optimized support structure (3) based on the derived digital 3D model.

2. The method (M) according to claim 1, wherein the thermal input data comprise final layer temperatures for each deposited layer (16a, 16b) representing a spatial temperature distribution for each deposited layer (16a, 16b) after cool down of the respective layer (16a, 16b) and before deposition of the respective next layer (16a, 16b).

3. The method (M) according to claim 1 or 2, wherein the method further comprises:
performing (M5) a thermo-mechanical process simulation of the component(1) with the topology optimized support structure (3); and
defining (M6) a pre-deformation of the topology optimized support structure (3) based on the thermo-mechanical process simulation to be considered during additive manufacturing of the component (1).

4. The method (M) according to one of the claims 1 to 3, wherein defining the digital 3D model comprises definition of a variable design space around the initial support structure (2), in which the topology optimization algorithm is executed.

5. The method (M) according to claim 4, wherein the topology optimization algorithm is executed iteratively until the design space matches predefined criteria.

6. The method (M) according to one of the claims 1 to 5, wherein the initial support structure (2) comprises several individual supports (2a) with corresponding contact areas (4), wherein the topology optimization algorithm is executed on each support (2a) individually.

7. An additive manufacturing device (10) comprising a control unit (11) configured to execute the method (M) according to one of the claims 1 to 6.

8. A computer program product comprising executable program instructions configured to, when executed, perform the method (M) according to one of the claims 1 to 6.

9. A non-transient computer-readable data storage medium comprising executable program instructions configured to, when executed, perform the method (M) according to one of the claims 1 to 6.
